# EUROPÄISCHE PATENTSCHRIFT

(11) **EP 0 789 609 B1**
(45) Veröffentlichungstag und Bekanntmachung des Hinweises auf die Patenterteilung: **07.01.1999**
(21) Anmeldenummer: 95936577.6
(22) Anmeldetag: 31.10.1995
(51) Int. Cl.: B01D 29/33, B01D 29/54, B01D 29/64, B01D 35/16

(54) **KERZENFILTERVORRICHTUNG MIT SPRITZVORRICHTUNG**
MULTIPLE TUBE FILTER WITH SPRAYING DEVICE
DISPOSITIF FILTRANT EN FORME DE BOUGIE A SYSTEME DE PULVERISATION

(30) Priorität: 03.11.1994 DE 9417636 U
(43) Veröffentlichungstag der Anmeldung: 20.08.1997
(73) Patentinhaber: Anton Steinecker Maschinenfabrik GmbH, D-85318 Freising (DE)
(72) Erfinder: REDL, Simon, D-85293 Reichertshausen (DE)
(74) Vertreter: Grünecker, Kinkeldey, Stockmair & Schwanhäusser Anwaltssozietät
(86) Internationale Anmeldenummer: EP9504275
(87) Internationale Veröffentlichungsnummer: WO9614127

(56) Entgegenhaltungen:
- EP-A- 0 324 330
- EP-A- 0 460 842
- DE-A- 2 606 804
- US-A- 4 834 883

## Beschreibung

Die vorliegende Erfindung betrifft eine Kerzenfiltervorrichtung für die Bierfiltration mit einem Filterbehälter.

Die Verwendung derartiger konventioneller Kerzenfiltervorrichtungen für die Bierfiltration ist weit verbreitet. Die herkömmlichen Kerzenfiltervorrichtungen weisen einen im wesentlichen zylindrischen oberen Filterkerzenaufnahmeraum auf, in dem eine Vielzahl von zueinander beabstandeten, vertikal angeordneten, stabförmigen Filterkerzen angeordnet sind. Nach unten hin wird der Kerzenaufnahmeraum durch ein sich verjüngendes Auslaufteil fortgesetzt. Über mehrere Zu- und Ableitungen, die vor allem im unteren und oberen Bereich des Filterbehälters vorgesehen sind, werden je nach Verfahrensstadium verschiedene Durchflußmedien zu- und abgeführt. Bei der Bierfiltration laufen dabei verschiedene Verfahrensschritte ab. Zunächst wird der Filterbehälter von unten nach oben mit Wasser gefüllt und das gesamte System entlüftet. Daraufhin wird Filterhilfsmittel, z.B. Kieselgur in den Filterbehälter eingeleitet, das sich an den Filterkerzen anschwemmt. In einer Filtervorphase wird das Wasser durch Bier von unten nach oben aus dem Filterbehälter verdrängt, wobei noch immer Filterhilfsmittel zudosiert wird. Danach erfolgt die eigentliche Filtration, in welcher Bier von unten nach oben unter weiterer Zugabe von Filterhilfsmittel durch die Filterkerzen hindurchdringt. In einer Filternachphase wird das Bier durch Wasser aus dem Filterbehälter verdrängt. Danach wird mit Luft das im Filterbehälter befindliche Wasser verdrängt. Der trockene Filterkuchen wird dann von den Filterkerzen abgesprengt, wonach ein Ausbringen des Filterhilfsmittels über eine untere Ableitung erfolgt. Für gewöhnlich wird nun der Filterbehälter mehrmals mit Wasser gefüllt und anschließend entleert, um die restliche Verunreinigung von Filterhilfsmittel zu entfernen. Dieser Vorgang ist jedoch zeitaufwendig und bringt einen hohen Wasserverbrauch mit sich.

Es wurde bereits vorgeschlagen, an der Unterseite der Trennwand, an der die Filterkerzen oben aufgehängt sind, eine Spritzleiste vorzusehen, die Wasser zur Reinigung an den Filterkerzen horizontal anspritzt. Nachteilig an dieser Anordnung ist jedoch, daß sich die Filterkerzen gegenseitig verdecken, so daß das Spritzwasser nicht zu allen Kerzen gelangt, was wiederum eine unzuverlässige Reinigung ergibt. Eine zuverlässige Reinigung ist jedoch bei der Bierbrauerei unabdinglich. Weiter ist an dieser Anordnung nachteilig, daß die Unterseite der Trennwand sowie die Behälterwandung nicht von Anlagerungen gereinigt werden.

Die US-A-4 834 883 zeigt eine Kerzenfiltervorrichtung, die für die Bierfiltration geeignet ist. Sie weist einen Filterbehälter, einen Filterkerzenaufnahmeraum in seinem oberen Teil und darunter einen Auslaufraum auf. Eine Trennwand im oberen Teil des Filterkerzenaufnahmeraums, an deren Unterseite Filterkerzen angeordnet sind, ist zwar nicht explizit gezeigt, bei solchen Anordnung jedoch selbstverständlich. Weiter zeigt sie eine Zuleitung unterhalb der Filterkerzen mit einem Spritzarm, der eine nach oben gerichtete Spritzdüse aufweist.

Der vorliegenden Erfindung liegt daher die Aufgabe zugrunde, eine Kerzenfiltervorrichtung bereitzustellen, die eine zuverlässige, einfache, zeit- und wassersparende Reinigung ermöglicht.

Erfindungsgemäß wird diese Aufgabe durch eine Kerzenfiltervorrichtung für die Bierfiltration mit einem Filterbehälter gelöst, der folgendes umfaßt:
- einen Filterkerzenaufnahmeraum im oberen Teil des Filterbehälters und einen darunter angeordneten Auslaufraum;
- eine Trennwand im oberen Teil des Filterkerzenaufnahmeraumes, an deren Unterseite Filterkerzen angeordnet sind;
- eine Zuleitung, unterhalb der Filterkerzen gelengen, mit zumindest einem drehbar gelagerten Spritzarm, der nach oben gerichtete Spritzdüsen aufweist, wobei die Spritzdüsen so angeordnet sind, daß sie bei Drehung des Spritzarmes konzentrische Spritzkreise erzeugen, die im wesentlichen zwischen den Filterkerzen liegen, so daß beim Betrieb der Spritzdüsen die Spritzflüssigkeit im wesentlichen gegen die Bereiche der Unterseite der Trennwand gerichtet ist, an denen keine Filterkerzen befestigt sind, und
- einen Antrieb zum Drehen der Spritzarme.

Die erfindungsgemäße Vorrichtung bringt den Vorteil mit sich, daß das Wasser aus den Spritzdüsen zwischen den Filterkerzen an die Unterseite der Trennwand gespritzt wird, so daß verbleibendes Filterhilfsmittel zuverlässig gelöst und mit dem nach unten abfließenden Wasser weggespült wird. Durch diese Anordnung der Spritzdüsen ist sichergestellt, daß das Wasser alle Zwischenräume zwischen den Filterkerzen erfaßt. So werden auch die Filterkerzen durch das nach oben gegen die Trennwand spritzende und nach unten abtropfende Wasser gereinigt, wobei auch sämtliche Reste des Filterhilfsmittels, die sich an den Filterkerzen angesetzt haben, gelöst und nach unten weggespült werden. Dadurch, daß das Wasser auch im Bereich der Seitenwandungen nach oben spritzt und an diesen herabläuft, werden auch die Seitenwandungen des Filterbehälters auf zuverlässige Art und Weise gereinigt. Dadurch, daß der Filterbehälter nicht vollständig mit Wasser gefüllt werden muß, sondern lediglich kleine Spritzwassermengen erforderlich sind, können somit erheblich Wasser- und somit Produktionskosten gespart werden. Da die Spritzarme mit den Spritzdüsen drehbar sind, kann die Anzahl der Spritzdüsen, die erforderlich ist, um die Filterkerzenanordnung ausreichend zu reinigen, minimiert werden.

Gemäß einem bevorzugten Ausführungsbeispiel der vorliegenden Erfindung erstreckt sich die Zuleitung entlang der Mittelachse des Filterbehälters wobei sich zwei gegenüberliegende Spritzarme radial nach außen erstrecken. Diese Anordnung bringt einen Kräfteausgleich mit sich, so daß es zu keiner einseitigen Hebelbelastung kommt. Somit ergibt sich eine gleichmäßige, ruhige und leichtgängige Drehung der Spritzarme. Durch die gleichmäßige Belastung verringert sich auch der Verschleiß, wodurch wiederum Wartungs- und Instandhaltungskosten auf ein Minimum reduziert werden. Diese Anordnung ermöglicht weiter, daß die Spritzdüsen so auf den gegenüberliegenden Spritzarmen verteilt werden können, daß jeweils eine Spritzdüse einen Spritzkreis erzeugt.

In weiterer vorteilhafter Ausgestaltung der Erfindung ist als Antrieb der Spritzarme zumindest eine horizontal gerichtete Öffnung auf einer Längsseite zumindest eines Spritzarmes so vorgesehen, daß Flüssigkeit über die Zuleitung durch die horizontal gerichtete Öffnung tritt und so die Spritzarme durch Rückstoß antreibt. Auf diese einfache und kostengünstig zu realisierende Weise werden die Spritzarme wie ein Wasserrad durch das aus den horizontal gerichteten Öffnungen tretende Wasser angetrieben. Dadurch ist kein aufwendiger mechanischer oder elektrischer Antrieb notwendig, was wiederum die Herstellungskosten für die erfindungsgemäße Kerzenfiltervorrichtung senkt.

Die Erfindung wird im folgenden anhand der in den Zeichnungen dargestellten Ausführungsbeispielen beschrieben.
- Fig. 1: zeigt schematisch einen Längsschnitt durch einen Filterbehälter gemäß einem ersten Ausführungsbeispiel der vorliegenden Erfindung,
- Fig. 2: zeigt einen Querschnitt durch eine Filterkerzenanordnung,
- Fig. 3: zeigt teilweise einen Längsschnitt durch einen Filterbehälter gemäß einem zweiten Ausführungsbeispiel der vorliegenden Erfindung.

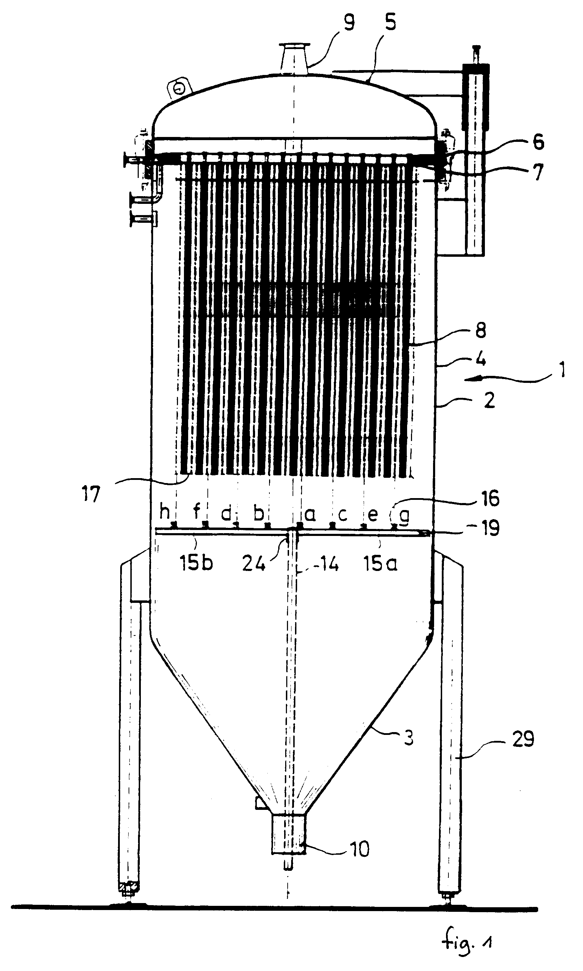

Fig. 1 zeigt ein erstes Ausführungsbeispiel der erfindungsgemäßen Kerzenfiltervorrichtung für die Bierfiltration. Die Kerzenfiltervorrichtung 1 ist im wesentlichen aus einem Filterbehälter 2 gebildet, der wiederum einen Behälterdeckel 5, einen sich daran anschließenden im wesentlichen zylindrischen Filterkerzenaufnahmeraum 4 und im weiteren Verlauf nach unten einen sich im wesentlichen konisch verjüngenden Auslaufbereich 3 aufweist. Oben am Behälterdeckel 5 und unten an der Mündung des Auslaufbereiches 3 sind zentrale Ein- und Auslaßflansche 9, 10 angebracht. Seitlich am unteren Bereich des zylindrischen Behälterabschnittes sind gleichmäßig über den Umfang verteilte stab- oder rohrförmige Standfüße 29 befestigt, die auf dem Boden stehen.

Zwischen dem Behälterdeckel 5 und dem Filterkerzenaufnahmeraum 4 ist eine mit Bohrungen versehene Trennwand 6 angeordnet. An jeder der über die Fläche der Trennwand 6 verteilten Vielzahl von Durchgangsöffnungen 7 ist nach unten eine stabförmige Kerze 8 als Filterelement befestigt. Über die Länge der Kerzen 8 hinaus ist der Filterbehälter 2 nach unten zunächst weiter zylindrisch ausgebildet.

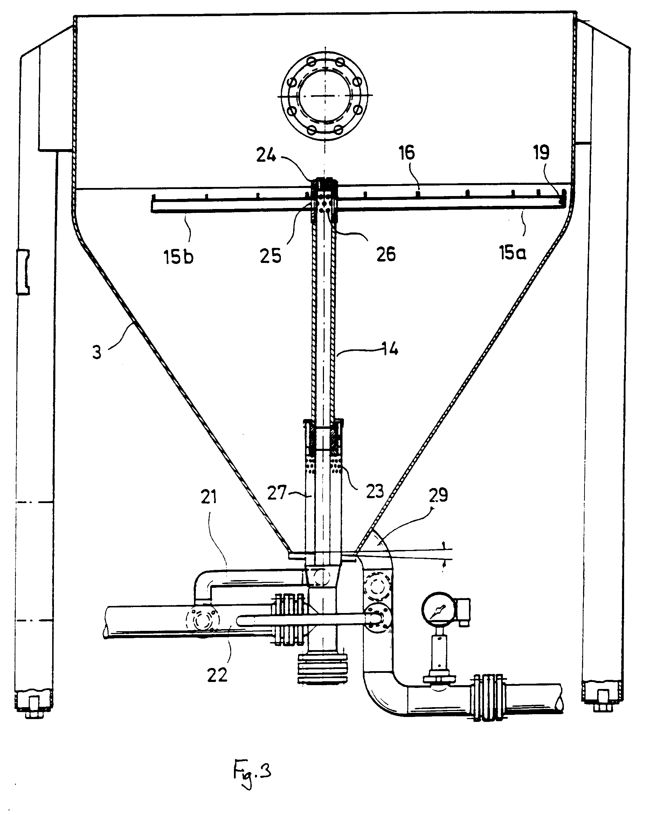

Unterhalb der Filterkerzen 8 ist eine Zuleitung 14 für Reinigungswasser vorgesehen, an derem oberen Ende zwei gleichlange Spritzarme 15a und 15b, wie im Zusammenhang mit Fig. 3 noch näher erläutert wird, drehbar gelagert sind. Die beiden Spritzarme weisen auf ihrer Oberseite nach oben gerichtete Spritzdüsen 16 auf wobei Spritzwasser, das über die Zuführung 14 in die Arme 15a,b gelangt über die Spritzdüsen 16 zwischen die Filterkerzen 8 gespritzt werden kann. Als Antrieb für die Spritzarme 15a,b ist zumindest eine horizontal gerichtete Öffnung 19 auf je der gleichen Längsseite der Spritzarme 15 so vorgesehen, daß Flüssigkeit über die Zuleitung 14 auch durch die Öffnung 19 tritt, wodurch die Spritzarme 15a,b durch die Rückstoßkraft des Wassers in Drehung versetzt werden. Es ist auch möglich, einen Elektromotor als Antrieb zu verwenden.

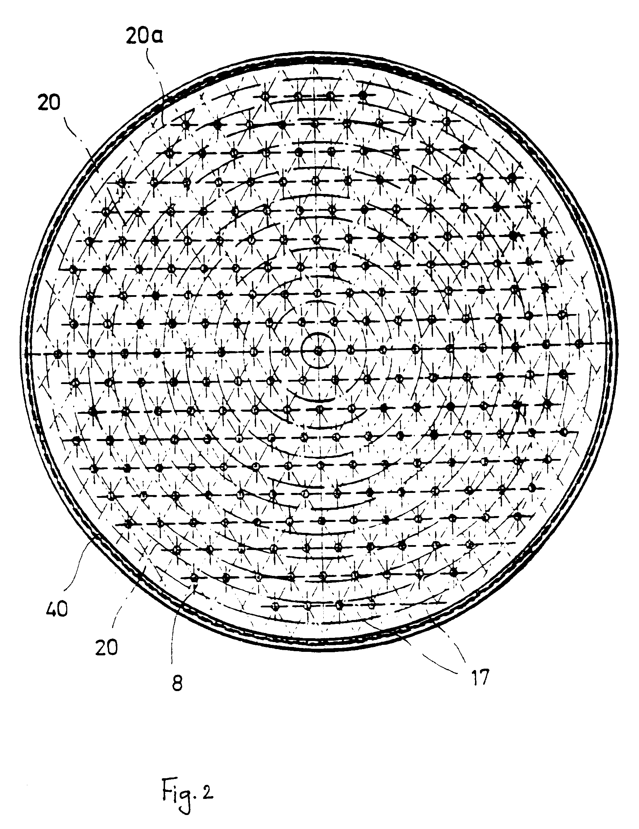

Die Spritzdüsen 16 sind über die gesamte Länge der beiden Arme 15a und b verteilt. Wie aus Fig. 1 ersichtlich ist, liegen die Spritzdüsen 16 den Zwischenräumen der einzelnen Filterkerzen 8 gegenüber. Wie aus Fig. 2 hervorgeht, erzeugen die Spritzdüsen 16 bei Drehung der Spritzarme 15a,b konzentrische Spritzkreise 20. Aus Fig. 2 ist ersichtlich, daß die konzentrischen Kreise, bedingt durch die Anordnung der Spritzdüsen 16, im wesentlichen zwischen den Filterkerzen 8 liegen. Die einzelnen Filterkerzen sind zueinander versetzt in parallelen Reihen angeordnet. Es können alle Filterkerzen rundherum gut vom Spritzwasser erreicht werden. Das Wasser aus den Spritzdüsen 16 kann so über die Zwischenräume 17, außen an den Filterkerzen 8 entlang bis an die Unterseite der Trennwand 6 gespritzt werden, um diese zu reinigen. Die konzentrischen Spritzkreise 20 sind so angeordnet, daß das Wasser im wesentlichen auf die Bereiche der Trennwand 6 spritzt, wo keine Filterkerzen angeordnet sind. Das Spritzwasser kann dann wieder entlang der Filterkerzen 8 herablaufen und von der Trennwand und den Kerzen gelöste Filterhilfsmittelreste mit nach unten tragen. Außerdem spritzt das Wasser des äußersten Spritzkreises 20a auch zwischen Filterbehälterwand 40 und Kerzen 8 nach oben und läuft an diesen herab, so daß auch die Filterbehälterwand 40 gereinigt wird. Die Anzahl und Anordnung der Spritzdüsen 16 richtet sich nach der Anzahl und Anordnung der Filterkerzen, so daß sowohl zwischen die Filterkerzen 8 als auch zwischen Filterkerzen 8 und Wand 40 Wasser gespritzt werden kann. Es ist besonders vorteilhaft, wenn das Spritzwasser mit Hilfe einer Steuereinrichtung aus den Düsen 16 in Intervallen nach oben gespritzt wird. So kann das Spritzwasser, in welchem Anlagerungen gelöst sind, entlang der Kerzen und der Filterbehälterwand ablaufen, bevor neues Spritzwasser aus den Spritzdüsen 16 gespritzt wird. Somit ergibt sich eine effektive und wassersparende Reinigung.

Bei dem in Fig. 1 gezeigten Ausführungsbeispiel sind die Spritzdüsen derart verteilt, daß jeweils eine Spritzdüse 16 einen Spritzkreis 20 erzeugt. So erzeugt die auf dem Spritzarm 15a angeordnete Spritzdüse 16a den kleinsten der konzentrischen Kreise, während die Spritzdüse 16b, die auf dem gegenüberliegenden Arm 15b angeordnet ist, den nächstgrößeren konzentrischen Kreis erzeugt. Die nachfolgenden konzentrischen Kreise werden dann der Reihe nach von den Spritzdüsen 16c,d,e,f,g,h gebildet, wobei die den benachbarten Spritzkreisen entsprechende Spritzdüsen jeweils auf den gegenüberliegenden Spritzarmen 15a,b liegen. Die äußerste Spritzdüse 16h erzeugt den Spritzkreis 20a, der die Filterkerzenanordnung umfaßt und zwischen den äußeren Filterkerzen 8 und der Filterbehälterwand 40 liegt. Es ist selbstverständlich auch möglich, daß pro Spritzkreis sowohl auf dem Spritzarm 15b als auch auf dem Spritzarm 15a eine Spritzdüse 16 vorgesehen ist.

Fig. 3 zeigt einen Teilschnitt einer weiteren Ausführungsform der vorliegenden Erfindung, die im wesentlichen der in Fig. 1 gezeigten Ausführungsform entspricht. Bei dieser Ausführungsform ist jedoch der Spritzarm 15a länger gewählt als der Spritzarm 15b. Die Spritzarme 15a und b sind drehbar über die Bundbuchse 24, die am oberen Ende der Zuführung 14 angebracht ist, gelagert. Wasser, das durch die externe Zuleitung 21 zu der Zuführung 14 geleitet wird, tritt durch die Austrittslöcher 26 in der Zuführung aus und gelangt über eine Durchgangsöffnung 25 der dichten Buchse ins Innere der Spritzarme 15a und b und kann so durch die Spritzdüsen 16, wie bereits näher ausgeführt, zu den Filterkerzen 8 gespritzt werden. Darüber hinaus spritzt das zugeführte Wasser aus der horizontal gerichteten Öffnung 19 wodurch die Arme angetrieben werden. Auch an dem Arm 15b ist eine horizontal gerichtete Antriebsöffnung in gleicher Weise vorgesehen. Spülwasser und Filterhilfsmittel können über die Ablaßleitung 29 abgeleitet werden. Des weiteren ist in Fig. 3 ein weiterer Zulaß 22 zu erkennen, über den beispielsweise Wasser, Bier oder Kieselgur eingebracht werden kann. Die über diese Zuleitung 22 kommende Flüssigkeit strömt an der Zuleitung 14 vorbei in das Verteilersteigrohr 27 und kann durch Austrittslöcher 23 in den Filterbehälter eintreten.

## Patentansprüche

1. Kerzenfiltervorrichtung (1) für die Bierfiltration mit einem Filterbehälter (2), der folgendes umfaßt:
- einen Filterkerzenaufnahmeraum (4) im oberen Teil des Filterbehälters (2) und einen darunter angeordneten Auslaufraum (3);
- eine Trennwand (6) im oberen Teil des Filterkerzenaufnahmeraumes (4), an deren Unterseite Filterkerzen (8) angeordnet sind;
- eine Zuleitung (14), unterhalb der Filterkerzen (8) gelegen, mit zumindest einem drehbar gelagerten Spritzarm (15a, 15b), der nach oben gerichtete Spritzdüsen (16) aufweist, wobei die Spritzdüsen (16) so angeordnet sind, daß sie bei Drehung des Spritzarmes (15a, 15b) konzentrische Spritzkreise (20) erzeugen, die im wesentlichen Zwischen den Filterkerzen (8) liegen, so daß beim Betrieb der Spritzdüsen die Spritzflüssigkeit im wesentlichen gegen die Bereiche der Unterseite der Trennwand (6) gerichtet ist, an denen keine Filterkerzen befestigt sind, und
- einen Antrieb (19) zum Drehen der Spritzarme (15a, 15b).

2. Kerzenfiltervorrichtung nach Anspruch 1, **dadurch gekennzeichnet**, daß sich die Zuleitung (14) entlang der Mittelachse (18) des Filterbehälters erstreckt und sich zwei gegenüberliegende Spritzarme (15a,b) radial nach außen erstrecken.

3. Kerzenfiltervorrichtung nach Anspruch 2, **dadurch gekennzeichnet**, daß die Spritzdüsen (16) auf den gegenüberliegenden Spritzarmen derart verteilt sind, daß jeweils eine Spritzdüse (16) einen Spritzkreis (20) erzeugt.

4. Kerzenfiltervorrichtung nach mindestens einem der vorhergehenden Ansprüche, **dadurch gekennzeichnet**, daß ein Spritzarm (15a,b) länger als der gegenüberliegende Spritzarm ist.

5. Kerzenfiltervorrichtung nach mindestens einem der vorhergehenden Ansprüche, **dadurch gekennzeichnet**, daß als Antrieb (19) der Spritzarme (15a,b) zumindest eine horizontal gerichtete Öffnung (19) auf einer Längsseite zumindest eines Spritzarmes (15a,b) derart vorgesehen ist, daß Flüssigkeit über die Zuleitung (14) durch die horizontal gerichtete Öffnung (19) tritt und so die Spritzarme (15a,b) durch Rückstoß antreibt.

## Claims

1. Tube filter device (1) for the filtration of beer with a filter cartridge (2) which is composed of the following:
- a tube filter receiving chamber (4) in the upper part of the filter cartridge (2) and an outlet chamber (3) located underneath;
- a separating wall (6) in the upper part of the tube filter receiving chamber (4) with a tube filter (8) at its underside;
- an inlet line (14), situated below the tube filter (8), with at least one rotary-seated spray arm (15a, 15b) having upward-directed spray nozzles (16), wherein the spray nozzles (16) are positioned so that they produce concentric spray circles (20) upon rotation of the spray arm (15a, 15b), said circles are located essentially between the tube filters (8), so that during operation of the spray nozzles, the spray liquid is directed essentially against the regions of the underside of the separating wall (6), to which no tube filters are attached; and
- a drive unit (19) to rotate the spray arms (15a, 15b).

2. Tube filter device according to Claim 1, characterized in that the inlet line (14) extends along the middle axis (18) of the filter cartridge and two opposing spray arms (15a, b) extend radially outward.

3. Tube filter device according to Claim 2, characterized in that the spray nozzles (16) are distributed along the opposing spray arms such that one spray nozzle (16) produces one spray circle (20).

4. Tube filter device according to at least one of the preceding claims, characterized in that one spray arm (15a, b) is longer than the opposing spray arm.

5. Tube filter device according to at least one of the preceding claims, characterized in that as drive unit (19) for the spray arms (15a, b) at least one horizontally directed opening (19) is provided on one longitudinal side of at least one spray arm (15a, b) such that liquid moves via the inlet line (14) through the horizontally directed opening (19) and thus drives the spray arms (15a, b) by means of recoil.

## Revendications

1. Dispositif filtrant (1) en forme de bougie pour la filtration de la bière, comprenant un récipient (2) pour les filtres qui comprend les éléments ci-après:
- un espace de réception (4) pour les bougies filtrantes dans la partie supérieure du récipient (2) pour les filtres et un espace d'évacuation (3) disposé par-dessous;
- une paroi de séparation (6) dans la partie supérieure de l'espace de réception (4) pour les bougies filtrantes, contre le côté inférieur duquel sont disposées des bougies filtrantes (8);
- un conduit d'amenée (14) disposé en dessous des bougies filtrantes (8), comprenant au moins un bras de pulvérisation (15a, 15b) monté en rotation, qui présente des gicleurs (16) orientés vers le haut, les gicleurs (16) étant disposés de telle sorte que, lors de la rotation du bras de pulvérisation (15a, 15b), on obtient des cercles de pulvérisation concentriques (20) qui sont disposés essentiellement entre les bougies filtrantes (8), si bien que, lors de la mise en circuit des gicleurs, le liquide de pulvérisation est orienté essentiellement en direction des zones du côté inférieur de la paroi de séparation (6), auxquelles aucune bougie filtrante n'est fixée, et
- un entraînement (19) pour faire tourner les bras de pulvérisation (15a, 15b).

2. Dispositif filtrant en forme de bougie selon la revendication 1, caractérisé en ce que le conduit d'amenée (14) s'étend le long de l'axe médian (18) du récipient pour les filtres et deux bras de pulvérisation opposés (15a, 15b) s'étendent vers l'extérieur en direction radiale.

3. Dispositif filtrant en forme de bougie selon la revendication 2, caractérisé en ce que les gicleurs (16) sont répartis sur les bras de pulvérisation opposés de telle sorte qu'un gicleur respectif (16) génère un cercle de pulvérisation (20).

4. Dispositif filtrant en forme de bougie selon au moins une des revendications précédentes caractérisé en ce qu'un bras de pulvérisation (15a, b) est plus long que le bras de pulvérisation opposé.

5. Dispositif filtrant en forme de bougie selon au moins une des revendications précédentes caractérisé en ce qu'on prévoit, à titre d'entraînement (19) des bras de pulvérisation (15a, b), au moins une ouverture (19) orientée en direction horizontale sur un côté longitudinal d'au moins un bras de pulvérisation (15a, b) de telle sorte que du liquide, s'écoulant via le conduit d'amenée (14), traverse l'ouverture (19) orientée en direction horizontale et propulse les bras de pulvérisation (15a, b) par réaction.
